# EUROPEAN PATENT APPLICATION

(11) **EP 4 679 632 A1**
(43) Date of publication of application: **14.01.2026**
(21) Application number: 25179501.9
(22) Date of filing: 28.05.2025
(51) Int. Cl.: H01Q 15/00, H01Q 19/06, H04B 7/145

(54) **ENHANCING OUTDOOR-INDOOR PENETRATION OF WIRELESS SIGNALS**

(30) Priority: 12.07.2024 GB 202410181
(71) Applicant: Airspan IP Holdco LLC, Boca Raton, FL 33431 (US)
(72) Inventor: RABAH, Daniel Hassanein, Windsor, SL4 6BY (GB)
(74) Representative: D Young & Co LLP

(57) **Abstract**

Systems, components, and methods for promoting the penetration of radiowaves between the exterior and the interior of a building are provided. An electromagnetic metasurface is mounted with respect to a surface of a building and a radiofrequency waveguide is mounted within the building. The electromagnetic metasurface is configured to focus incident radiowaves onto an entry to the radiofrequency waveguide and the radiofrequency waveguide comprises at least one radiating opening for causing radiowaves that have been guided along the radiofrequency waveguide to radiate into an interior of the building.

## Description

The present techniques relate to wireless telecommunications networks.

A wireless telecommunications network may cover a wide geographical area, enabling user equipment (UEs) to receive and send data from any location across that area. Accordingly, UEs can be operated in outdoor locations. Nevertheless, it is desirable for UEs also to be operated in indoor locations, such as when the user is within an office environment, a home environment, a leisure activity environment, or any other kind of indoor space. However, whilst radio signals can cover outdoor distances often with only modest attenuation, these signals can be significantly attenuated by building materials. Such attenuation may be particularly acute for some radio frequency ranges. Accordingly the coverage of a wireless telecommunications network can be significantly hindered in indoor environments.

At least some examples provide a system comprising:
an electromagnetic metasurface for mounting with respect to a surface of a building; and
a radiofrequency waveguide for mounting within the building,
wherein the electromagnetic metasurface is configured to focus incident radiowaves onto an entry to the radiofrequency waveguide,
and the radiofrequency waveguide comprises at least one radiating opening for causing radiowaves that have been guided along the radiofrequency waveguide to radiate into an interior of the building.

At least some examples provide an electromagnetic metasurface for mounting with respect to a surface of a building,
wherein the electromagnetic metasurface is configured to focus incident radiowaves onto an entry to a radiofrequency waveguide mounted within the building,, wherein the radiofrequency waveguide comprises at least one radiating opening for causing radiowaves that have been guided along the radiofrequency waveguide to radiate into an interior of the building.

At least some examples provide a radiofrequency waveguide for mounting within a building, comprising:
an entry to the radiofrequency waveguide, wherein the entry is configured to receive incident radiowaves focussed thereon by an electromagnetic metasurface mounted with respect to a surface of the building; and
at least one radiating opening for causing radiowaves that have been guided along the radiofrequency waveguide to radiate into an interior of the building.

At least some examples provide a method of promoting penetration of radiowaves into an interior of a building, comprising the steps of:
mounting an electromagnetic metasurface with respect to a surface of the building; and
mounting a radiofrequency waveguide within the building,
wherein the electromagnetic metasurface is configured to focus incident radiowaves onto an entry to the radiofrequency waveguide,
and the radiofrequency waveguide comprises at least one radiating opening for causing radiowaves that have been guided along the radiofrequency waveguide to radiate into an interior of the building.

The present techniques will be described further, by way of example only, with reference to embodiments thereof as illustrated in the accompanying drawings, to be read in conjunction with the following description, in which:
Figure 1 schematically illustrates an outdoor environment, a building, and a system for enhancing outdoor-indoor penetration of radio signals in accordance with some examples;
Figure 2 schematically illustrates a building and a system for enhancing outdoor-indoor penetration of radio signals comprising an electromagnetic metasurface and a radiofrequency waveguide in accordance with some examples;
Figure 3 schematically illustrates a building and a system for enhancing outdoor-indoor penetration of radio signals comprising a radiofrequency waveguide having a flared entry in accordance with some examples;
Figure 4 schematically illustrates a building and a system for enhancing outdoor-indoor penetration of radio signals comprising a radiofrequency waveguide having a flared entry and directional ducting in accordance with some examples;
Figure 5 schematically illustrates a building and a system for enhancing outdoor-indoor penetration of radio signals comprising an electromagnetic metasurface mounted with respect to a window in accordance with some examples;
Figure 6 schematically illustrates a building and a system for enhancing outdoor-indoor penetration of radio signals comprising an electromagnetic metasurface substituting for a window in accordance with some examples;
Figure 7 schematically illustrates a building and a system for enhancing outdoor-indoor penetration of radio signals comprising time-multiplexed multiple electromagnetic metasurfaces in accordance with some examples;
Figure 8 schematically illustrates a building and a system for enhancing outdoor-indoor penetration of radio signals comprising a dynamically configurable electromagnetic metasurface in accordance with some examples;
Figure 9 is a flow diagram showing a sequence of steps taken in the method of some examples; and
Figure 10 is a flow diagram showing a sequence of steps taken in the method of some examples.

In examples herein there is a system comprising:
an electromagnetic metasurface for mounting with respect to a surface of a building; and
a radiofrequency waveguide for mounting within the building,
wherein the electromagnetic metasurface is configured to focus incident radiowaves onto an entry to the radiofrequency waveguide,
and the radiofrequency waveguide comprises at least one radiating opening for causing radiowaves that have been guided along the radiofrequency waveguide to radiate into an interior of the building.

An electromagnetic metasurface has the ability to refract electromagnetic waves, much in the manner of an optical lens refracting visible light. The inventor of the present techniques has realised that such refraction of electromagnetic waves may be employed in the context of radiowaves radiated from an outdoor transmitter and incident on a building, combined with the provision of a radiofrequency waveguide leading into the building, to enhance the penetration of the outdoor radiowaves into the indoor environment within the building. In particular, when the electromagnetic metasurface is configured to focus the incident radiowaves onto an entry to the radiofrequency waveguide, this allows a useful signal strength of the focused radio waves to be propagated along the waveguide, and furthermore that providing the radiofrequency waveguide with a radiating opening allows the radiowaves propagated along the waveguide to be radiated into the interior of the building. This then enables user equipment within the building to receive those propagated radiowaves radiated into the interior of the building with a signal strength greater than would be the case for the user equipment directly receiving the radiowaves radiated from the outdoor transmitter. Equally, it will be appreciated that the configuration of the radiofrequency waveguide and the electromagnetic metasurface also mean that uplink signals transmitted by the user equipment to be received by an outdoor receiver are also promoted, in that a signal transmitted by the user equipment within the building can enter the radiofrequency waveguide via one of the openings, be propagated in the radiofrequency waveguide and, from the above-mentioned entry (now exit) of the radiofrequency waveguide, radiate outwards onto the electromagnetic metasurface, whereby the electromagnetic metasurface refracts the radiating signal such that it then continues its propagation in the outdoor space towards the receiver.

The entry to the radiofrequency waveguide may be variously configured, in particular to cooperate with the configuration of the electromagnetic metasurface, such that the incoming radiowaves refracted by the electromagnetic metasurface are efficiently guided into the radiofrequency waveguide. In some examples, the entry to the radiofrequency waveguide comprises a flared shape with respect to a remainder of the radiofrequency waveguide. The flared shape may be variously configured, for example in the shape of a horn.

The radiofrequency waveguide may be mounted is a great variety of ways within the building depending for example on: the particular layout of the building; the position of the electromagnetic metasurface mounted on or near the chosen surface of the building; the routing which it desired for the radiofrequency waveguide to take; and the region or regions of the interior of the building where it is desired for the enhanced signal propagation to reach. In some examples, the radiofrequency waveguide is configured to be installed within the building such that a majority of the radiofrequency waveguide is hidden by an interior surface of the building. This advantageously means that the radiofrequency waveguide is physically protected behind that interior surface as well as (at least in the majority) not being visible to people within the building, which may be aesthetically preferred. Any interior surface of the building may be chosen for this purpose as appropriate to the particular deployment, but in some examples, the interior surface of the building is at least one of: a ceiling; a wall; and/or a floor.

The electromagnetic metasurface can be configured to be mounted with respect to any surface of the building depending, for example, on the orientation of the incident radiowaves with respect to the building, on the required orientation of radiofrequency waveguide mounted within the building, on aesthetic or practical requirements for the mounting of the electromagnetic metasurface, and so on. In some examples the electromagnetic metasurface is configured to be mounted with respect to a substantially vertical surface of the building.

The substantially vertical surface of the building providing the mounting for the electromagnetic metasurface can be variously chosen. In some examples, the substantially vertical surface of the building is an exterior wall of the building. In some examples, the substantially vertical surface of the building is a window of the building.

Where the electromagnetic metasurface can be provided using materials which are substantially transparent to the visible portion of the electromagnetic spectrum, in some examples the electromagnetic metasurface is substantially transparent and is configured to substitute for a window of the building. Such a configuration can have a number of advantages. On the one hand this can make the presence of the electromagnetic metasurface less (if at all) noticeable and on the other hand where this then places the electromagnetic metasurface at an opening in the surface (e.g. wall) of the building, this may further enhance the penetration of the incident radiowaves into the building, because the attenuation of the surface (e.g. wall) itself is at least in part avoided.

In some examples the electromagnetic metasurface is configured to form a backing surface of a wall adornment for the building. Such a wall adornment may be on the exterior surface of the building, for example acting as an advertising feature or an identifier for the building, or may be on an interior surface of the building, for example acting as an aesthetic feature for the benefit of the occupants of the building.

More than one electromagnetic metasurface may cooperate to refract the incident radiowaves, and in some examples the system further comprises: multiple electromagnetic metasurfaces for mounting with respect to the surface of a building, wherein the electromagnetic metasurfaces are each configured to focus incident radiowaves on the entry to the radiofrequency waveguide; and a control unit configured to selectively enable each of the multiple electromagnetic metasurfaces in a time-multiplexed manner.

The refraction provided by an electromagnetic metasurfaces may be configured in a variety of ways. In some examples the electromagnetic metasurface may be configured in advance of its deployment (for example being tuned in accordance with a signal survey carried out at the site in advance) and in some examples the electromagnetic metasurface may be configured during its deployment (for example being tuned in accordance with a signal survey carried out at the site at the time of deployment). Advance configuration and tuning of the electromagnetic metasurface may comprise a choice of a static configuration of the electromagnetic metasurface when it is manufactured. However in some examples, the electromagnetic metasurface is configurable in situ to adjust the focussing of the incident radiowaves onto the entry to the radiofrequency waveguide. Such an electromagnetic metasurface can be electronically tuned to adjust its refractive properties. This enables, in some examples, a system in which the electromagnetic metasurface is configured at deployment of the system.

The adjustment of the refractive properties of the electromagnetic metasurface is not limited to only taking place as a one-off step at deployment and in some examples, the electromagnetic metasurface is dynamically configurable during operation of the system. This allows the system to adapt to changing conditions affecting the incident radiowaves, whether these be due to a reconfiguration of the transmitter, a change in the environment outside the building (either permanent, such as the erection of another building, or temporary, such as a large vehicle passing by the building)

To support the dynamic configuration of the electromagnetic metasurface, in some examples the system further comprises a radiowave reception device for mounting with respect to the surface of the building in proximity to the electromagnetic metasurface, wherein the radiowave reception device is configured to provide control information for dynamically configuring the electromagnetic metasurface in dependence on received radiowaves.

The system may be deployed for the promotion of the penetration of a variety of radiowaves, but is plainly of particular relevance to radiowaves which are more susceptible to attenuation by building materials. In some examples, the incident radiowaves are in Frequency Range 2 (FR2) for 5G New Radio (5G NR).

In examples herein there is an electromagnetic metasurface for mounting with respect to a surface of a building,
wherein the electromagnetic metasurface is configured to focus incident radiowaves onto an entry to a radiofrequency waveguide mounted within the building,, wherein the radiofrequency waveguide comprises at least one radiating opening for causing radiowaves that have been guided along the radiofrequency waveguide to radiate into an interior of the building.

In examples herein there is a radiofrequency waveguide for mounting within a building, comprising:
an entry to the radiofrequency waveguide, wherein the entry is configured to receive incident radiowaves focussed thereon by an electromagnetic metasurface mounted with respect to a surface of the building; and
at least one radiating opening for causing radiowaves that have been guided along the radiofrequency waveguide to radiate into an interior of the building.

In examples herein there is a method of promoting penetration of radiowaves into an interior of a building, comprising the steps of:
mounting an electromagnetic metasurface with respect to a surface of the building; and
mounting a radiofrequency waveguide within the building,
wherein the electromagnetic metasurface is configured to focus incident radiowaves onto an entry to the radiofrequency waveguide,
and the radiofrequency waveguide comprises at least one radiating opening for causing radiowaves that have been guided along the radiofrequency waveguide to radiate into an interior of the building.

In some examples, the method further comprises:
sampling received radiowaves in proximity to the electromagnetic metasurface; and
configuring the electromagnetic metasurface in dependence on received radiowaves.

In some examples, the method further comprises:
mounting a radiowave reception device with respect to the surface of the building in proximity to the electromagnetic metasurface; and
operating the radiowave reception device to provide control information for dynamically configuring the electromagnetic metasurface in dependence on received radiowaves.

Some particular embodiments are now described with reference to the figures.

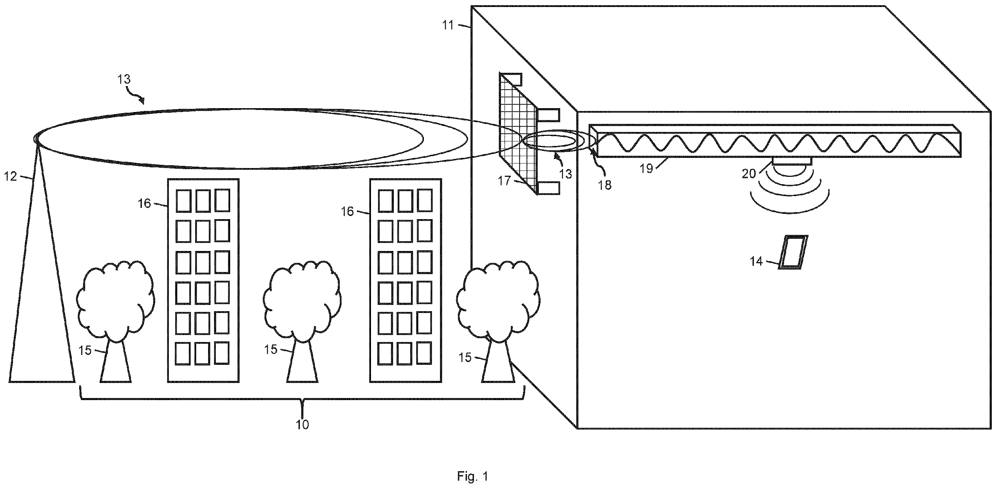

Figure 1 schematically illustrates an outdoor environment 10, a building 11, and a system for enhancing outdoor-indoor penetration of radio signals in accordance with some examples. A distant base station 12 transmits and receives radio signals 13 to provide a communications link with items of user equipment (UE) 14. A simplified outdoor environment comprising trees 15 and other buildings 16 is shown. An electromagnetic metasurface 17 is mounted on the surface of the building 11. The surface may be an exterior surface or an interior surface of the building, but Figure 1 shows an example of mounting on an exterior surface. The refractive properties of the electromagnetic metasurface 17 are selected such that the radio signals 13 that are incident on the electromagnetic metasurface 17 are focussed onto an entry 18 of a radiofrequency waveguide 19. Radiowaves are then propagated along the radiofrequency waveguide 19. The radiofrequency waveguide 19 comprises at least one radiating opening 20, via which the radiowaves that have been guided along the radiofrequency waveguide 19 can radiate into an interior of the building. Incoming radio signals are thus received by the UE 14. Equally, radio signals that are transmitted by the UE 14 can enter the opening 20, be propagated along the radiofrequency waveguide 19, radiate from the entry 18, to then be refracted by the electromagnetic metasurface 17 and received by the base station 12.

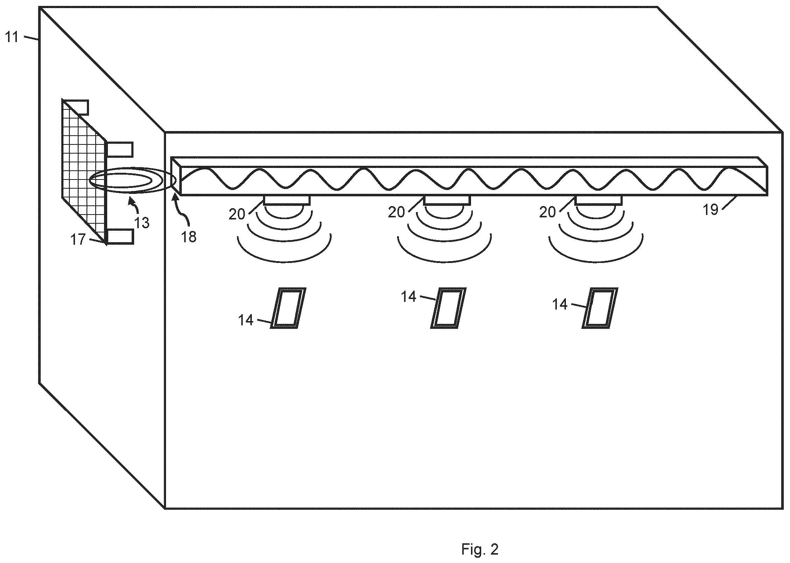

Figure 2 schematically illustrates a variant on the configuration shown in Figure 1, in which the radiofrequency waveguide 19 comprises multiple radiating openings 20, via which the radiowaves that have been guided along the radiofrequency waveguide 19 can radiate into an interior of the building. The provision of multiple radiating openings 20 can support a better distribution of the incoming radio signals (and a better gathering of outgoing radio signals) across the internal space of the building 11 to support the connectivity of multiple UEs 14.

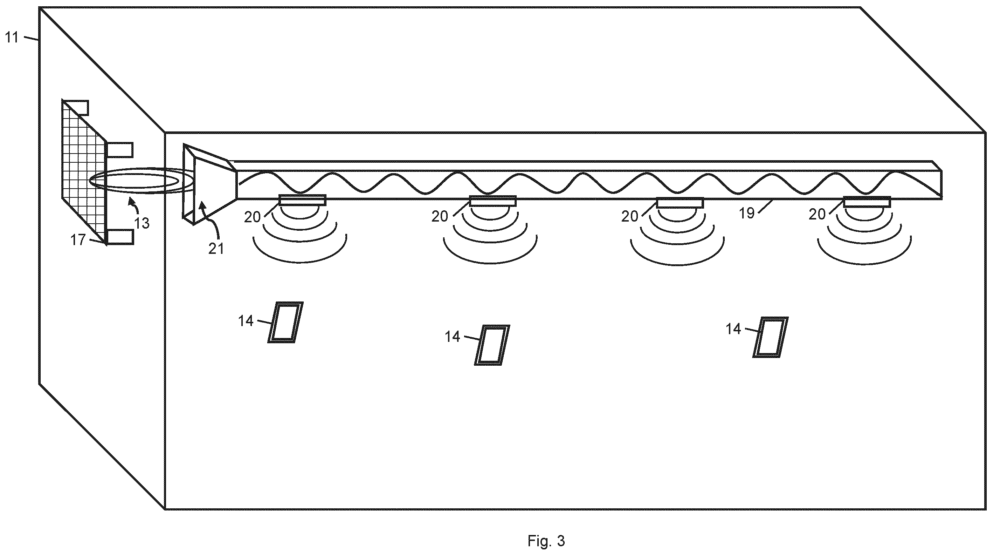

Figure 3 schematically illustrates a variant on the configurations shown in Figures 1 and 2, in which the entry to the radiofrequency waveguide 19 has a flared shape, in particular here in the shape of a horn 21. This flaring of the end of the radiofrequency waveguide 19 facilitates the gathering of the refracted radiowaves 13 from the electromagnetic metasurface 17 and conversely the guiding of radiowaves that have been propagated along the radiofrequency waveguide 19 towards the electromagnetic metasurface 17.

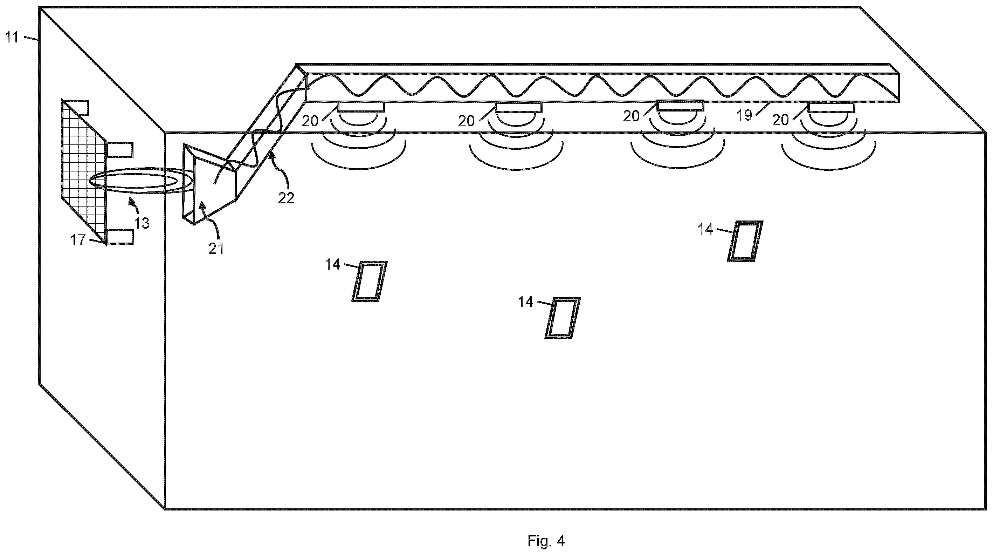

Figure 4 schematically illustrates a variant on the configurations shown in Figure 3, in which the radiofrequency waveguide 19 has a section of directional ducting 22. Such directional ducting 22 can take a range of forms, from a simple one-stage redirection of the waveguide to a multiple stage layout of the waveguide, connecting the entry to the waveguide via a series of sections at various angles to one another to the main portion of the waveguide. This redirecting of the waveguide may be used to navigate internal structures of the building and/or may be used to facilitate positioning a majority portion of the radiofrequency waveguide behind an interior surface of the building, hiding it from view. In the example shown in Figure 4, the directional ducting 22 allows the majority portion of the radiofrequency waveguide 19 to be installed behind a ceiling of the interior space of the building. The same principle may however also be used to position it behind a wall or a floor.

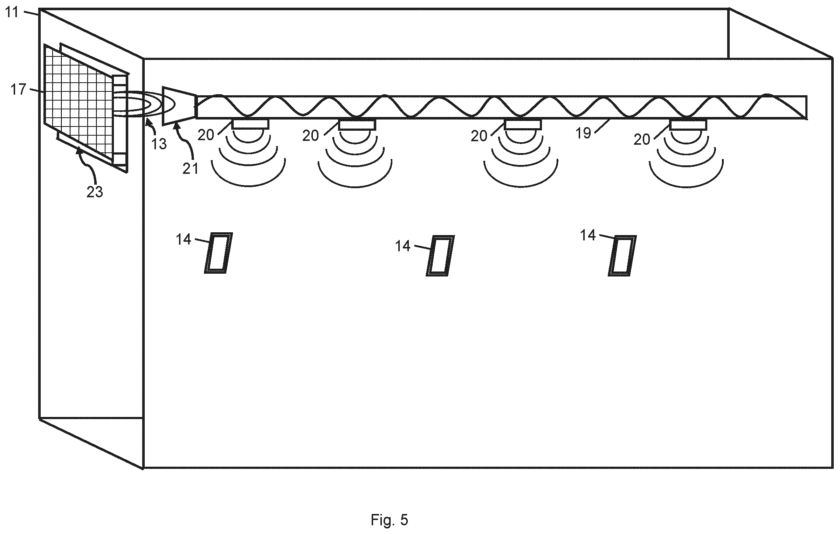

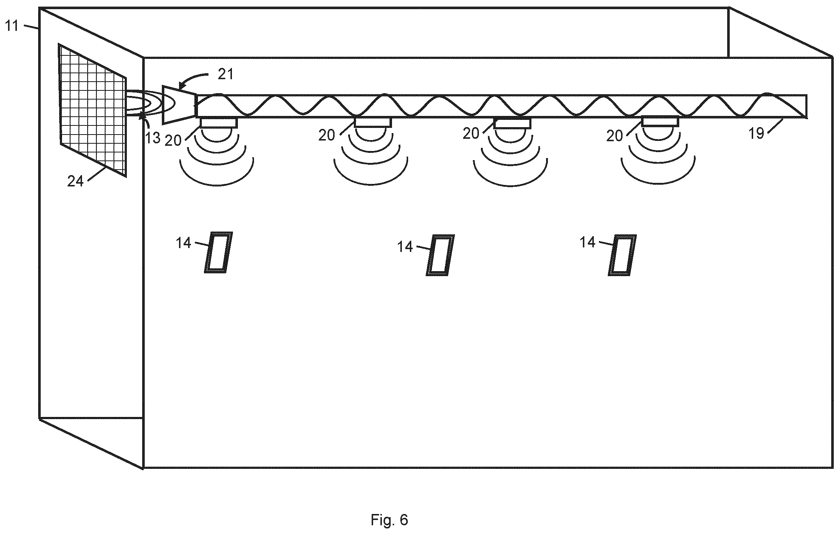

Figure 5 schematically illustrates a building 11 in which the system for enhancing outdoor-indoor penetration of radio signals comprises an electromagnetic metasurface 17 mounted with respect to a window 23 in accordance with some examples. The electromagnetic metasurface 17 is mounted to generally corresponding to the positioning of the window 23, at an offset away from the surface of the building. In other examples, the electromagnetic metasurface can substitute for a window and Figure 6 schematically illustrates a building 11 and a system for enhancing outdoor-indoor penetration of radio signals in which this is the case. The electromagnetic metasurface 24 provides the visible-light transparent material of the window.

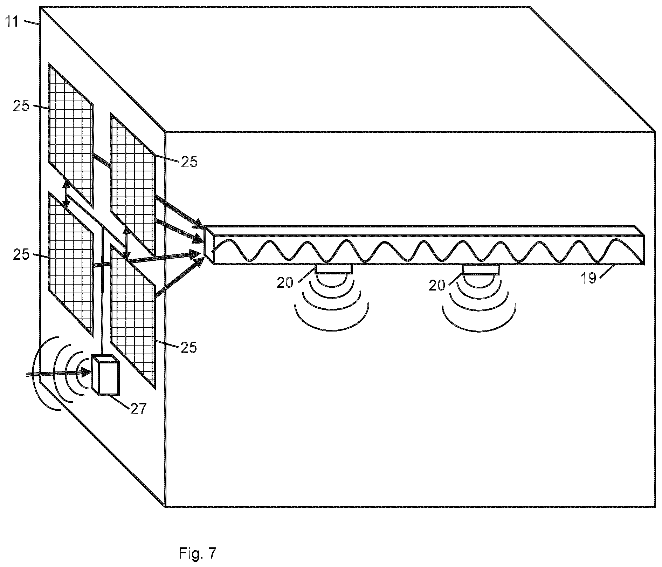

Figure 7 schematically illustrates a building 11 and a system for enhancing outdoor-indoor penetration of radio signals comprising multiple electromagnetic metasurfaces 25 in accordance with some examples. Here a number of electromagnetic metasurfaces 25 are each configured to focus incident radiowaves onto the entry to the radiofrequency waveguide 19. The system further comprises a control unit 27 configured to selectively enable each of the multiple electromagnetic metasurfaces 25 in a time-multiplexed manner. Only one of the multiple electromagnetic metasurfaces is active at any given moment in time, to avoid destructive interference of the radio signals entering the radiofrequency waveguide. The control unit 27 can be configured to select between the multiple electromagnetic metasurfaces based on a range of different criteria. Generally, the goal of the selection is to increase the quality and/or throughput of the radio signals entering the radiofrequency waveguide. As shown in the figure, the control unit 27 may itself be provided as a UE, able to sample the incoming radio signals, and to select between the multiple electromagnetic metasurfaces 25 accordingly.

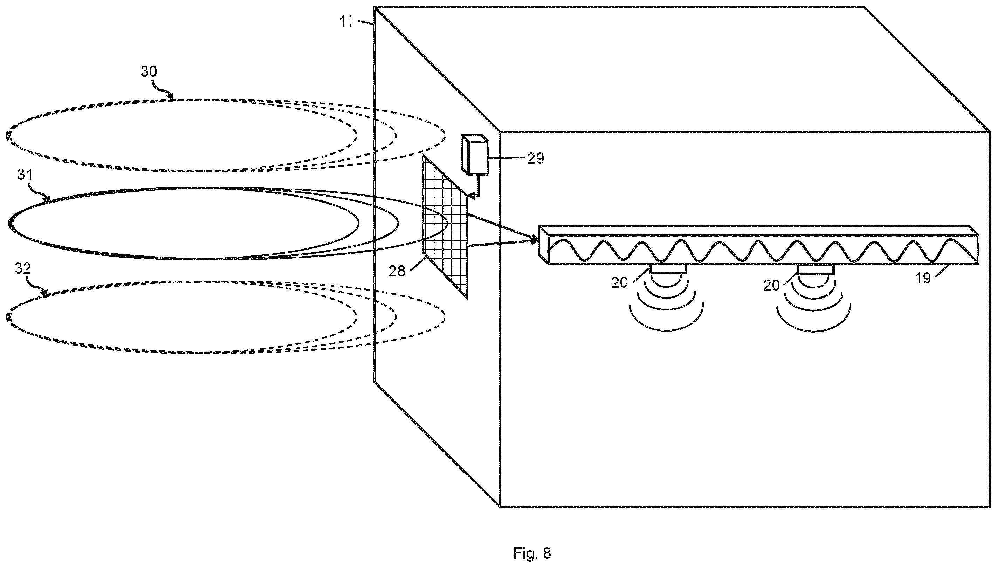

Figure 8 schematically illustrates a building 11 and a system for enhancing outdoor-indoor penetration of radio signals comprising a dynamically configurable electromagnetic metasurface 28 in accordance with some examples. There is also a control device 29 provided in association with the electromagnetic metasurface 28, which is configured to adjust the refractive properties of the electromagnetic metasurface 28. This may for example be carried out on deployment by an installation engineer, who measures the signal strength and direction of the incident radio signals 31 and using the control device 29 adjusts the refractive properties of the electromagnetic metasurface 28 to focus the incident radio signals 31 onto the entry to the waveguide 19. Alternatively or in addition, the control device 29 may be provided to also have radiowave reception capability (e.g. as a further type of UE) and the measured signal strength and direction of the incident radio signals 31 can be used during ongoing operation of the system, to adapt the configuration of the electromagnetic metasurface 28. In this manner, a change in distribution and strength of the incident radio signals (30 and 32 in the figure) can be adapted for. Such a change may be essentially permanent, such as when the outdoor environment is modified by the addition or removal of buildings / trees etc., or may be transient, such as when a large vehicle passes by the building.

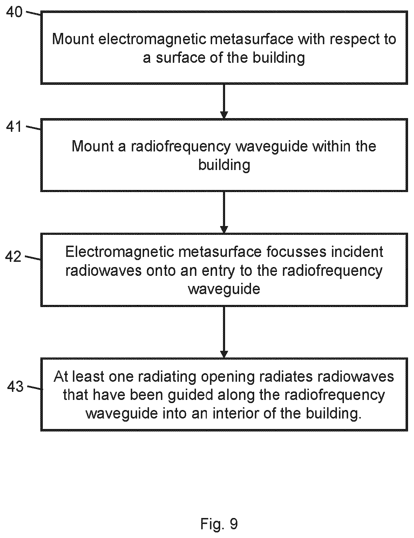

Figure 9 is a flow diagram showing a sequence of steps taken in the method of some examples. At step 40, an electromagnetic metasurface is mounted with respect to a surface of a building. Then at step 41, a radiofrequency waveguide is mounted within the building. Next at step 42 the electromagnetic metasurface focusses incident radiowaves onto an entry to the radiofrequency waveguide and at step 43 at least one radiating opening of the radiofrequency waveguide radiates radiowaves that have been guided along the radiofrequency waveguide into an interior of the building.

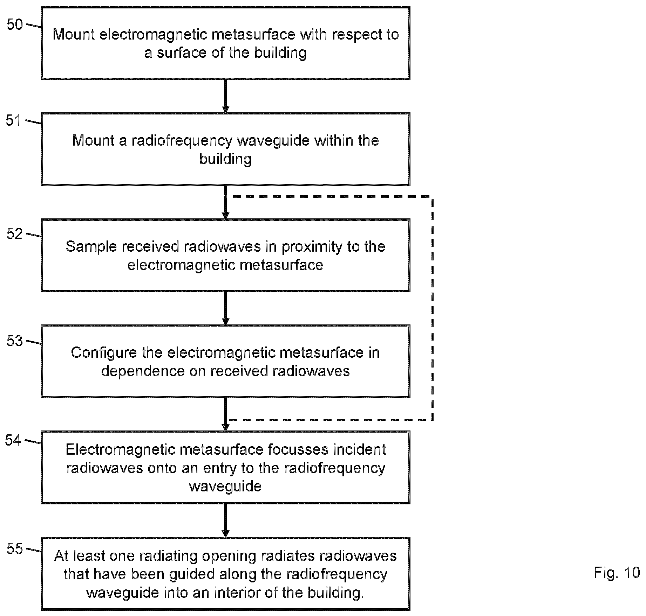

Figure 10 is a flow diagram showing a sequence of steps taken in the method of some examples. At step 50, an electromagnetic metasurface is mounted with respect to a surface of a building. Then at step 51, a radiofrequency waveguide is mounted within the building. Next at step 52 the received radiowaves are sampled in proximity to the electromagnetic metasurface and at step 53 the electromagnetic metasurface is configured in dependence on received radiowaves. At step 54 the electromagnetic metasurface focusses incident radiowaves onto an entry to the radiofrequency waveguide and at step 55 at least one radiating opening of the radiofrequency waveguide radiates radiowaves that have been guided along the radiofrequency waveguide into an interior of the building. Note that there is an optional loopback path from after step 53 to step 52, representing the option that, after an initial configuration at step 53, and whilst steps 54 and 55 are ongoing, a continuous process of sampling the received radiowaves (step 52) and reconfiguring the electromagnetic metasurface accordingly (step 52) may be in place.

In brief overall summary, systems, components, and methods for promoting the penetration of radiowaves between the exterior and the interior of a building are provided. An electromagnetic metasurface is mounted with respect to a surface of a building and a radiofrequency waveguide is mounted within the building. The electromagnetic metasurface is configured to focus incident radiowaves onto an entry to the radiofrequency waveguide and the radiofrequency waveguide comprises at least one radiating opening for causing radiowaves that have been guided along the radiofrequency waveguide to radiate into an interior of the building.

In the present application, the words "configured to..." are used to mean that an element of an apparatus has a configuration able to carry out the defined operation. In this context, a "configuration" means an arrangement or manner of interconnection of hardware or software. For example, the apparatus may have dedicated hardware which provides the defined operation, or a processor or other processing device may be programmed to perform the function. "Configured to" does not imply that the apparatus element needs to be changed in any way in order to provide the defined operation.

Although illustrative embodiments have been described in detail herein with reference to the accompanying drawings, it is to be understood that the invention is not limited to those precise embodiments, and that various changes, additions and modifications can be effected therein by one skilled in the art without departing from the scope of the invention as defined by the appended claims. For example, various combinations of the features of the dependent claims could be made with the features of the independent claims without departing from the scope of the present invention.

## Claims

1. A system comprising:
an electromagnetic metasurface for mounting with respect to a surface of a building; and
a radiofrequency waveguide for mounting within the building,
wherein the electromagnetic metasurface is configured to focus incident radiowaves onto an entry to the radiofrequency waveguide,
and the radiofrequency waveguide comprises at least one radiating opening for causing radiowaves that have been guided along the radiofrequency waveguide to radiate into an interior of the building.

2. The system of claim 1, wherein the entry to the radiofrequency waveguide comprises a flared shape with respect to a remainder of the radiofrequency waveguide;
the radiofrequency waveguide is configured to be installed within the building such that a majority of the radiofrequency waveguide is hidden by an interior surface of the building; and
the interior surface of the building is at least one of:
a ceiling;
a wall; and/or
a floor.

3. The system of any preceding claim, wherein the electromagnetic metasurface is configured to be mounted with respect to a substantially vertical surface of the building.

4. The system of claim 3, wherein the substantially vertical surface of the building is a window of the building.

5. The system of claim 3, where the electromagnetic metasurface is substantially transparent and is configured to substitute for a window of the building.

6. The system of any preceding claim, further comprising:
multiple electromagnetic metasurfaces for mounting with respect to the surface of a building, wherein the electromagnetic metasurfaces are each configured to focus incident radiowaves on the entry to the radiofrequency waveguide; and
a control unit configured to selectively enable each of the multiple electromagnetic metasurfaces in a time-multiplexed manner.

7. The system of any preceding claim, wherein the electromagnetic metasurface comprises multiple metasurface cells, wherein each metasurface cell is configured to focus incident radiowaves on the entry to the radiofrequency waveguide.

8. The system of any preceding claim, wherein the electromagnetic metasurface is configurable in situ to adjust the focussing of the incident radiowaves onto the entry to the radiofrequency waveguide.

9. The system of claim 8, further comprising a radiowave reception device for mounting with respect to the surface of the building in proximity to the electromagnetic metasurface, wherein the radiowave reception device is configured to provide control information for dynamically configuring the electromagnetic metasurface in dependence on received radiowaves, wherein
the electromagnetic metasurface is dynamically configurable during operation of the system.

10. The system of any preceding claim, wherein the incident radiowaves are in Frequency Range 2 (FR2) for 5G New Radio (5G NR).

11. An electromagnetic metasurface for mounting with respect to a surface of a building,
wherein the electromagnetic metasurface is configured to focus incident radiowaves onto an entry to a radiofrequency waveguide mounted within the building,, wherein the radiofrequency waveguide comprises at least one radiating opening for causing radiowaves that have been guided along the radiofrequency waveguide to radiate into an interior of the building.

12. A radiofrequency waveguide for mounting within a building, comprising:
an entry to the radiofrequency waveguide, wherein the entry is configured to receive incident radiowaves focussed thereon by an electromagnetic metasurface mounted with respect to a surface of the building; and
at least one radiating opening for causing radiowaves that have been guided along the radiofrequency waveguide to radiate into an interior of the building.

13. A method of promoting penetration of radiowaves into an interior of a building, comprising the steps of:
mounting an electromagnetic metasurface with respect to a surface of the building; and
mounting a radiofrequency waveguide within the building,
wherein the electromagnetic metasurface is configured to focus incident radiowaves onto an entry to the radiofrequency waveguide,
and the radiofrequency waveguide comprises at least one radiating opening for causing radiowaves that have been guided along the radiofrequency waveguide to radiate into an interior of the building.

14. The method of claim 13, further comprising:
sampling received radiowaves in proximity to the electromagnetic metasurface; and
configuring the electromagnetic metasurface in dependence on received radiowaves.

15. The method of claim 13, further comprising:
mounting a radiowave reception device with respect to the surface of the building in proximity to the electromagnetic metasurface; and
operating the radiowave reception device to provide control information for dynamically configuring the electromagnetic metasurface in dependence on received radiowaves.
